# EUROPEAN PATENT APPLICATION

(11) **EP 2 582 193 A1**
(43) Date of publication of application: **17.04.2013**
(21) Application number: 11791913.4
(22) Date of filing: 03.06.2011
(51) Int. Cl.: H04W 72/04

(54) **METHOD AND DEVICE FOR TRANSMITTING REFERENCE SIGNALS**

(30) Priority: 10.06.2010 CN 201010196806
(71) Applicant: Huawei Technologies Co., Ltd., Shenzhen, Guangdong 518129 (CN)
(72) Inventor: ZHOU, Mingyu, Guangdong 518129 (CN); WAN, Lei, Guangdong 518129 (CN); REN, Xiaotao, Guangdong 518129 (CN)
(74) Representative: Epping - Hermann - Fischer
(86) International application number: PCT/CN2011/075250
(87) International publication number: WO 2011/153922

(57) **Abstract**

A method and a device for transmitting a reference signal, RS, are provided. The method relates to the technique field of wireless communication, and can improve the anti-interference ability of the RS transmitted from antennas. The method includes following steps: based on a mapping relationship between antennas, transmission layers and RS resources, a user equipment, UE, generates an RS on each transmission layer by using an RS resource corresponding to the transmission layer, and transmits the generated RS at a first RS transmission time via an antenna corresponding to the transmission layer; the UE changes the mapping relationship between the antennas, the transmission layers and the RS resources; based on the changed mapping relationship, the UE generates an RS on each transmission layer by using an RS resource corresponding to the transmission layer, and transmits the generated RS at a second RS transmission time via an antenna corresponding to the transmission layer. The method is primarily applied to the process of transmitting the RS via multi antennas.

## Description

### FIELD OF TECHNOLOGY

The present invention relates to the field of wireless communication technology, and particularly to a method and a device for transmitting a reference signal.

### BACKGROUND

In the wireless communication system, when a Base Station (BS) transmits a signaling to a User Equipment (UE) to control the UE to transmit a reference signal (RS) to the BS, if there are M antennas on the UE side, the BS can transmit the signaling to the UE to control the UE to transmit N RSs from M antennas simultaneously, wherein the RS corresponding to each transmission layer is generated from its corresponding RS resource, and transmitted via an antenna corresponding to the transmission layer. For example, in the Long Term Evolution-Advanced (LTE-Advanced) system, at most 4 antennas may be equipped on the UE side, and the BS can control the UE through the signaling to map the RSs corresponding to a plurality of transmission layers to a plurality of antennas for a transmission.

However, the inventor finds that in the prior art, the RS resource allocated by the BS to the above different UEs are not completely orthogonal to each other. When a plurality of UEs transmit the RSs in the same frequency resource, if some UEs transmit a plurality of RSs from a plurality of antennas, the transmitted different RSs undergo different interferences from an RS transmitted by other UE. When the signals transmitted via certain antennas undergo strong interferences from other UE, the performance for the BS to detect the RSs transmitted from those antennas is very likely to be quite poor.

### SUMMARY

The embodiments of the present invention provide a method and a device for transmitting a reference signal (RS), so as to improve the anti-interference abilities of the RS transmitted via the antennas.

On one aspect, the present invention provides a method for transmitting an RS, wherein the method is applicable to a scenario where a UE has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, the method comprising:
generating, by the UE, an RS on each transmission layer by using an RS resource corresponding to the transmission layer based on the mapping relationship, and transmitting the generated RS via an antenna corresponding to the transmission layer at a first RS transmission time;
changing, by the UE, the mapping relationship between the antennas, the transmission layers and the RS resources; and
generating, by the UE, an RS on each transmission layer by using an RS resource corresponding to the transmission layer based on the changed mapping relationship, and transmitting the generated RS via an antenna corresponding to the transmission layer at a second RS transmission time.

On another aspect, the present invention provides a communication device, wherein the communication device has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, the communication device comprising:
a first processing unit configured to generate an RS on each transmission layer by using an RS resource corresponding to the transmission layer based on the mapping relationship, and transmit the generated RS via an antenna corresponding to the transmission layer at a first RS transmission time; and
a remapping unit configured to change the mapping relationship between the antennas, the transmission layers and the RS resources,
wherein the first processing unit is further configured to generate an RS on each transmission layer by using an RS resource corresponding to the transmission layer based on the changed mapping relationship, and transmit the generated RS via the antenna corresponding to the transmission layer at a second RS transmission time.

On another aspect, the present invention provides a method for transmitting an RS, wherein the method is applicable to a scenario where a UE has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, wherein at a first RS transmission time, an RS transmitted via an antenna corresponding to each transmission layer is generated by the UE on the transmission layer by using an RS resource corresponding to the transmission layer based on the mapping relationship; the method comprising:
transmitting a remapping control signaling to the UE, so that the UE changes the mapping relationship between the antennas, the transmission layers and the RS resources, generates an RS on each transmission layer by using an RS resource corresponding to the transmission layer based on the changed mapping relationship, and transmits the generated RS via an antenna corresponding to the transmission layer at a second RS transmission time.

On another aspect, the present invention provides a base station, wherein the base station is applicable to a scenario where a UE has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, wherein at a first RS transmission time, an RS transmitted via an antenna corresponding to each transmission layer is generated by the UE on the transmission layer by using an RS resource corresponding to the transmission layer based on the mapping relationship; the base station comprising:
a remapping control signaling transmission unit configured to transmit a remapping control signaling to the UE, so that the UE changes the mapping relationship between the antennas, the transmission layers and the RS resources, generates an RS on each transmission layer by using an RS resource corresponding to the transmission layer based on the changed mapping relationship, and transmits the generated RS via an antenna corresponding to the transmission layer at a second RS transmission time.

In the application scenario of the embodiments of the present invention described above, the UE has at least two antennas, and there are at least two transmission layers and at least two RS resources, wherein each transmission layer corresponds to one RS resource and each transmission layer corresponds to at least one antenna. At a first RS transmission time, the UE generates an RS on each transmission layer by using an RS resource corresponding to the transmission layer based on a mapping relationship existing between the antennas, the transmission layers and the RS resources, and transmits the generated RS via an antenna corresponding to the transmission layer;

Then, the UE changes the mapping relationship between the antennas, the transmission layers and the RS resources. At a second RS transmission time, the UE generates an RS on each transmission layer by using an RS resource corresponding to the transmission layer based on the changed mapping relationship, and transmits the generated RS via an antenna corresponding to the transmission layer.

Since the UE in the embodiments of the present invention can change the mapping relationship between the antennas, the transmission layers and the RS resources at different transmission time, so as to change the RS transmitted via the antennas at different transmission time, as compared with the prior art, the present invention avoids the problem that the performance for the BS to detect the RSs transmitted from those antennas is very likely to be quite poor because the RS transmitted via those antennas continuously undergo strong interferences from other UEs, and improves the anti-interference abilities of the RS transmitted via the antennas.

### BRIEF DESCRIPTION OF THE DRAWINGS

In order to more clearly describe the technical solutions of the prior art or the embodiments of the present invention, the drawings to be used in the descriptions of the prior art or the embodiments are briefly introduced as follows. Obviously, the following drawings just illustrate some embodiments of the present invention, and a person skilled in the art can obtain other drawings from these drawings without paying a creative effort.
Fig. 1 is a flowchart of a method for transmitting an RS provided by an embodiment of the present invention;
Fig. 2 is a schematic diagram in which a UE transmits an RS at a first RS transmission time provided by an embodiment of the present invention;
Fig. 3 is a schematic diagram in which a UE transmits an RS at a second RS transmission time provided by an embodiment of the present invention;
Fig. 4 is a flowchart of another method for transmitting an RS provided by an embodiment of the present invention;
Fig. 5 is a schematic diagram in which another UE transmits an RS at a second RS transmission time provided by an embodiment of the present invention;
Fig. 6 is a schematic diagram in which still another UE transmits an RS at a first RS transmission time provided by an embodiment of the present invention;
Fig. 7 is a schematic diagram in which still another UE transmits an RS at a second RS transmission time provided by an embodiment of the present invention;
Fig. 8 is a schematic diagram in which yet another UE transmits an RS at a second RS transmission time provided by an embodiment of the present invention;
Fig. 9 is a schematic diagram in which even another UE transmits an RS at a second RS transmission time provided by an embodiment of the present invention;
Fig. 10 is a schematic diagram in which yet another UE transmits an RS at a first RS transmission time provided by an embodiment of the present invention;
Fig. 11 is a schematic diagram in which even yet another UE transmits an RS at a second RS transmission time provided by an embodiment of the present invention;
Fig. 12 is a structure diagram of a communication device provided by an embodiment of the present invention; and
Fig. 13 is another structure diagram of a communication device provided by an embodiment of the present invention.

### DETAILED DESCRIPTION

In the embodiments of the present invention, it is assumed that in the application scenarios, the UE has at least two antennas, which correspond to at least two transmission layers and at least two RS resources, wherein a mapping relationship exists between the antennas, the transmission layers and the RS resources; each transmission layer corresponds to one RS resource and each transmission layer corresponds to at least one antenna.

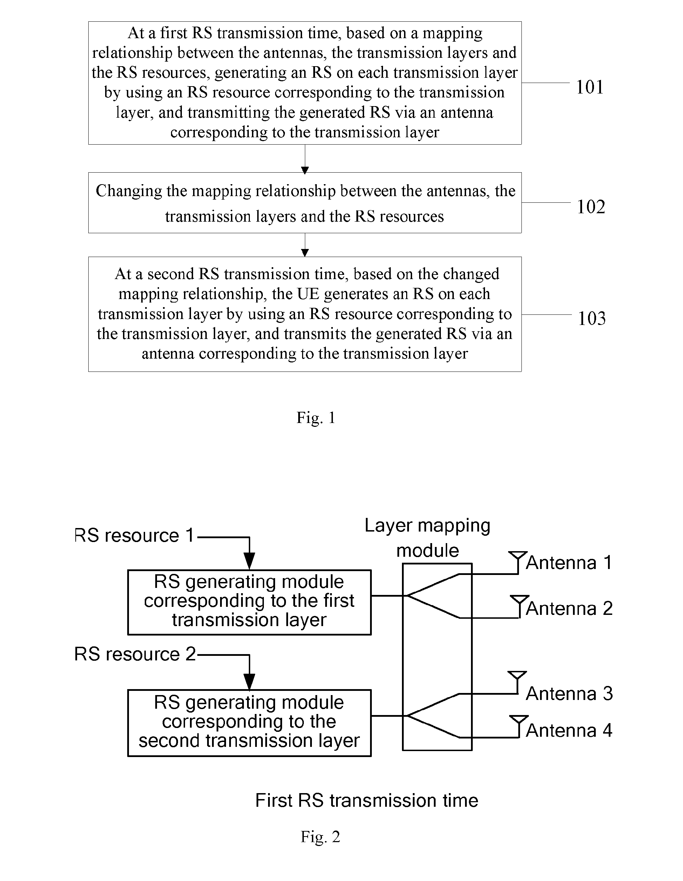

The embodiment as illustrated in Fig. 1 provides a method for transmitting an RS, including the steps of:
101: at a first RS transmission time, based on a mapping relationship between the antennas, the transmission layers and the RS resources, the UE generates an RS on each transmission layer by using an RS resource corresponding to the transmission layer, and transmits the generated RS via an antenna corresponding to the transmission layer.

For example, an optional solution in the practical application process is that on the UE side as illustrated in Fig. 2, a layer mapping module maps a first transmission layer to antennas 1, 2, and maps a second transmission layer to antennas 3, 4, respectively;
an RS generating module corresponding to the first transmission layer generates, on the first transmission layer, an RS of the first transmission layer by using RS resource 1, and the UE transmits the RS of the first transmission layer via antennas 1, 2 corresponding to the first transmission layer; and
an RS generating module corresponding to the second transmission layer generates, on the second transmission layer, an RS of the second transmission layer by using RS resource 2, and the UE transmits the RS of the second transmission layer via antennas 3, 4 corresponding to the second transmission layer.

102: the UE changes the mapping relationship between the antennas, the transmission layers and the RS resources.

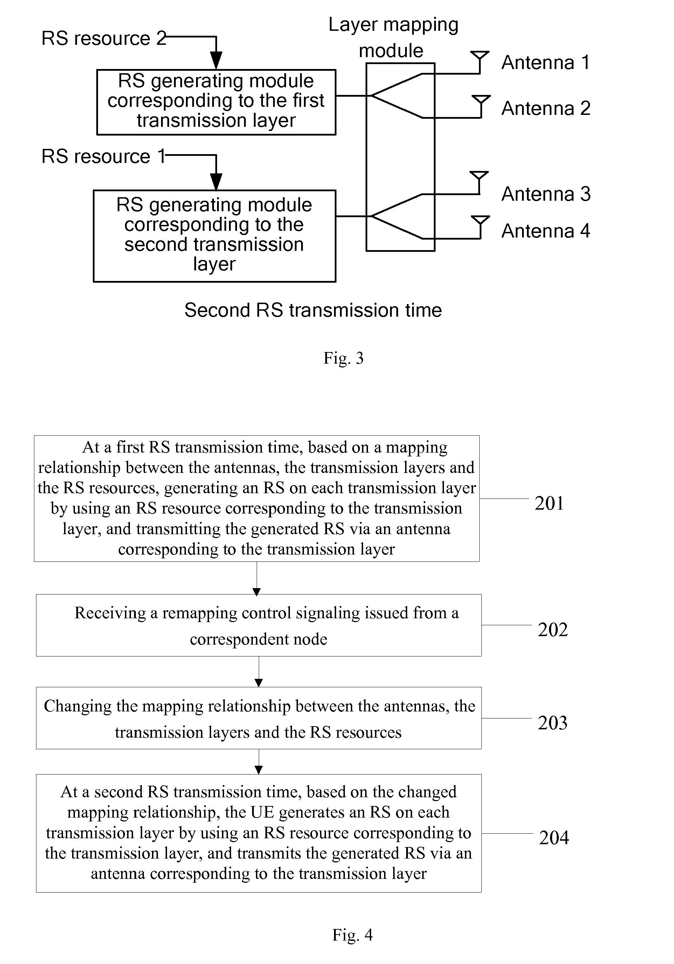

For example, on the UE side as illustrated in Fig. 2, the UE changes RS resource 1 corresponding to the first transmission layer into RS resource 2, and changes RS resource 2 corresponding to the second transmission layer into RS resource 1, respectively. The schematic diagram of the changed UE side is illustrated in Fig. 3.

103: at a second RS transmission time, based on the changed mapping relationship, the UE generates an RS on each transmission layer by using an RS resource corresponding to the transmission layer, and transmits the generated RS via an antenna corresponding to the transmission layer.

For example, at the second RS transmission time, on the UE side as illustrated in Fig. 3, the RS generating module corresponding to the first transmission layer generates, on the first transmission layer, an RS of the first transmission layer by using RS resource 2, and the UE transmits the RS of the first transmission layer via antennas 1, 2 corresponding to the first transmission layer; and
the RS generating module corresponding to the second transmission layer generates, on the second transmission layer, an RS of the second transmission layer by using RS resource 1, and the UE transmits the RS of the second transmission layer via antennas 3, 4 corresponding to the second transmission layer.

In the embodiment, the first RS transmission time and the second RS transmission time are only used to distinguish the two RS transmission time, rather than defining the specific positional relationship between the two RS transmission time. For example, the first RS transmission time and the second RS transmission time may be two RS transmission time neighboring or not neighboring to each other. The first RS transmission time and second RS transmission time also do not limit the number of the RS transmission time in the embodiment of the present invention.

The UE described in the embodiment of the present invention can change the RS transmitted via the antennas at different transmission time, thereby avoiding the problem that the performance for the BS to detect the RS transmitted from those antennas is very likely to be quite poor when the RS transmitted via certain antennas continuously undergo strong interferences from the RS transmitted by other UEs, and improving the anti-interference abilities of the RS transmitted via the antennas.

The technical solutions in the embodiments of the present invention will be clearly and completely described as follows with reference to the drawings.

The embodiment as illustrated in Fig. 4 provides a method for transmitting an RS, including the steps of:
201: at a first RS transmission time, based on a mapping relationship between the antennas, the transmission layers and the RS resources, the UE generates an RS on each transmission layer by using an RS resource corresponding to the transmission layer, and transmits the generated RS via an antenna corresponding to the transmission layer.

For example, an optional solution in the practical application process is that on the UE side as illustrated in Fig. 2, a layer mapping module maps a first transmission layer to antennas 1, 2, and maps a second transmission layer to antennas 3, 4, respectively;
an RS generating module corresponding to the first transmission layer generates, on the first transmission layer, an RS of the first transmission layer by using RS resource 1, and the UE transmits the RS of the first transmission layer via antennas 1, 2 corresponding to the first transmission layer; and
an RS generating module corresponding to the second transmission layer generates, on the second transmission layer, an RS of the second transmission layer by using RS resource 2, and the UE transmits the RS of the second transmission layer via antennas 3, 4 corresponding to the second transmission layer.

202: the UE receives a remapping control signaling sent from a correspondent node, wherein the signaling may be transmitted independently or carried in another signaling.

For example, the signaling may be carried in a signaling employed by the BS to notify the UE to transmit data in the layer shifting mode, a signaling employed by the BS to notify the UE to always transmit the RS of each layer in one-to-one correspondence with the data stream of that layer, a signaling employed by the BS to notify the UE to transmit one codeword from a plurality of antennas simultaneously, a signaling employed by the BS to notify the UE to transmit more than one codeword from a plurality of antennas simultaneously, a signaling employed by the BS to notify the UE to receive an ACK/NAK of a plurality of codewords in a binding mode, a signaling employed by the BS to notify the UE to receive a plurality of ACKs/NAKs of a plurality of codewords, a signaling employed by the BS to notify the UE to be served jointly by a plurality of cells, or a signaling employed by the BS to notify the UE of the RS resources used in a plurality of layers.

203: the UE changes the mapping relationship between the antennas, the transmission layers and the RS resources based on the remapping control signaling.

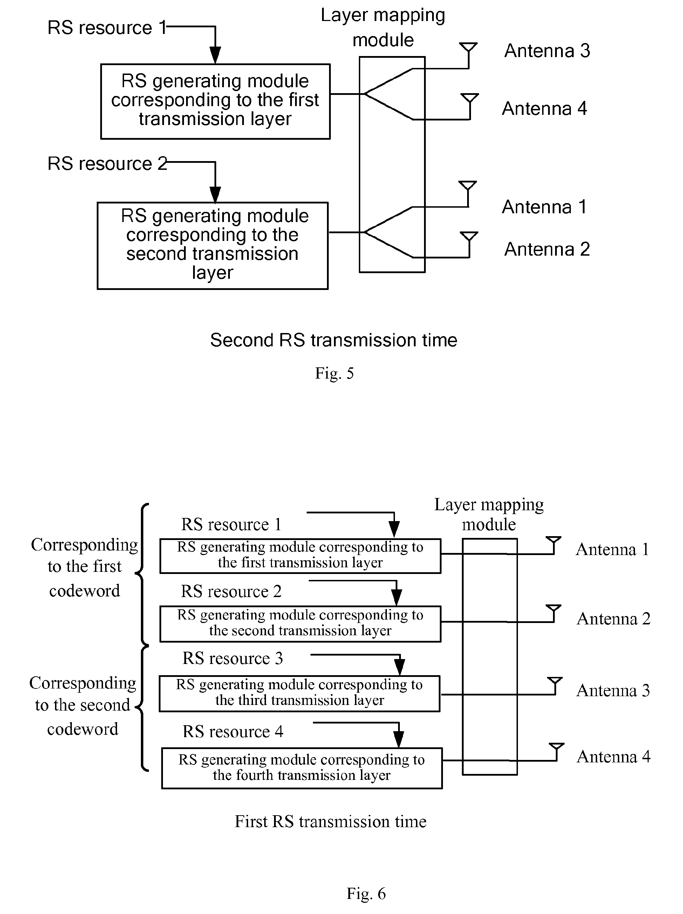

For example, on the UE side as illustrated in Fig. 2, antennas 1, 2 may be set as a first antenna group, and antennas 3, 4 may be set as a second antenna group. When the mapping relationship between the transmission layers and the antennas is changed, preferably, the UE changes antennas 1, 2 in the first antenna group corresponding to the first transmission layer into antennas 3, 4 in the second antenna group corresponding to the second transmission layer, and changes antennas 3, 4 in the second antenna group corresponding to the second transmission layer into antennas 1, 2 in the first antenna group corresponding to the first transmission layer, respectively. The schematic diagram of the UE side after the change of the mapping relationship is illustrated in Fig. 5.

In the practical application process, one antenna in the first antenna group may also be exchanged with one antenna in the second antenna group. For example, antenna 1 in the first antenna group is changed into antenna 3 in the second antenna group while antenna 2 remains unchanged; and antenna 3 in the second antenna group is changed into antenna 1 in the first antenna group while antenna 4 remains unchanged.

204: based on the changed mapping relationship, the UE generates an RS on each transmission layer by using an RS resource corresponding to the transmission layer, and transmits the generated RS via an antenna corresponding to the transmission layer at the second RS transmission time.

For example, at the second RS transmission time and on the UE side as illustrated in Fig. 5, the RS generating module corresponding to the first transmission layer generates, on the first transmission layer, an RS of the first transmission layer by using RS resource 1, and the UE transmits the RS of the first transmission layer via antennas 3, 4 corresponding to the first transmission layer; and

the RS generating module corresponding to the second transmission layer generates, on the second transmission layer, an RS of the second transmission layer by using RS resource 2, and the UE transmits the RS of the second transmission layer via antennas 1, 2 corresponding to the second transmission layer.

An operation of changing the mapping relationship between two transmission time is described in the above application scenario. In the practical application scenario, such an operation of changing the mapping relationship may be performed continuously at different transmission time. For example, the mapping relationship is changed again between the second and third transmission time, and the same transmission mode used at the first transmission time may be employed at the third transmission time. Similarly, the mapping relationship is changed again between the third and fourth transmission time, and the same transmission mode used at the second transmission time may be employed at the fourth transmission time.

After the change of the mapping relationship, the RS transmitted via the antennas are also changed, and the strong interference on one antenna can be dispersed to other antennas, thereby avoiding the problem in the prior art that the performance for the BS to detect the RS transmitted from those antennas is very likely to be quite poor, and improving the anti-interference abilities of the RS transmitted via the antennas.

Regarding the embodiment as illustrated in Fig. 4, the following aspects shall be pointed out:
1. In step 203, the UE changes the mapping relationship between the antennas, the transmission layers and the RS resources based on the remapping control signaling received in step 202. In the practical application process, step 202 may be not performed, and an alternative solution is that the UE automatically changes the mapping relationship, and the BS does not need to transmit any signaling to the UE for triggering.

For example, when the UE transmits the data in the layer shifting mode (i.e., the UE exchanges a plurality of layers of data on different data symbols), it automatically changes the RS resources used by different transmission layers at different time. Or,
when the UE always transmits the RS of each layer in one-to-one correspondence with the data stream of that layer, for example, when two layers of data streams are to be transmitted by the UE, the UE always transmits the RS corresponding to the first transmission layer in one-to-one correspondence with the data stream of the first transmission layer on a same antenna, and always transmits the RS corresponding to the second transmission layer in one-to-one correspondence with the data stream of the second transmission layer on a same antenna, thereby changing the RS resources used by different transmission layers at different time automatically. Or,
when the UE transmits one codeword from a plurality of antennas simultaneously, it automatically changes the RS resources used by different transmission layers or different antennas at different time, wherein one codeword denotes one independent packet. Or,
when the UE transmits more than one codeword from a plurality of antennas simultaneously, it changes the RS resources used by different transmission layers at different time automatically. Or,
when the UE receives an ACK/NAK of a plurality of codewords in a binding mode (i.e., the UE only receives one ACK/NAK to acquire whether the transmitted codewords have been correctly demodulated by the BS), it automatically changes the RS resources used by different transmission layers at different time. Or,
when the UE receives a plurality of ACKs/NAKs of a plurality of codewords (i.e., the UE receives a plurality of ACKs/NAKs to acquire whether the transmitted codewords have been correctly demodulated by the BS, respectively), it automatically changes the RS resources used by different transmission layers at different time. Or,
when the UE is served by a plurality of cells jointly, it automatically changes the RS resources used by different transmission layers at different time. The process may specifically include: when the UE detects that the signal of a neighbor cell is stronger than a certain threshold, it is deemed that the UE is served by a plurality of cells jointly, and then the UE automatically changes the RS resources used by different transmission layers at different time. Or,
when the RS resources used by the UE have a low orthogonality, the RS resources used by different transmission layers are automatically changed at different time. For example, when the UE uses #0 cyclic shift CS0 and #3 cyclic shift CS3 to transmit the RS corresponding to two transmission layers, it changes the RS resources used by different transmission layers at different time since CS0 and CS3 have a low orthogonality. Herein, the criterion for judging whether or not "the RS resources used by the UE have a low orthogonality" may be preset on both of the sides of the UE and the BS, thus the BS does not need to transmit a signaling to the UE for notification. Or, the BS may also notify the UE of the criterion, for example as follows: when the distance between the CSs used by the UE in different layers is less than 4, it is determined that "the RS resources used by the UE have a low orthogonality". Thus, if the UE uses CS0 and CS4, no change needs to be made; while if the UE uses CS0 and CS3, it automatically changes the RS resources used by different transmission layers at different time.
2. In the aforementioned embodiment, the change of the mapping relationship between the antennas, the transmission layers and the RS resources occurs between the first RS transmission time and the second RS transmission time. The first RS transmission time and second RS transmission time mentioned in the embodiment of the present invention is different RS transmission time in the same transmission time interval. Since the RS includes DM RS and SRS, for the different RS, the change of the mapping relationship between the antennas, the transmission layers and the RS resources also occurs at different time.

When the RS is the DM RS, the different RS transmission time is transmission time corresponding to a different DM RS in the same transmission time interval. For example, in the LTE-Advanced system, one TTI includes 2 timeslots each having one DM RS symbol, then the operation of changing the mapping relationship occurs at the DM RS transmission time in two timeslots in the same TTI.

When the RS is the SRS, the different RS transmission time is transmission time corresponding to a different SRS. For example, in the LTE-Advanced system, the time when the UE transmits SRS is the last symbol of one TTI, and the UE periodically transmits the SRS; assuming that the period is two TTIs, then the operation of changing the mapping relationship occurs between the last symbols of every two TTIs.
3. The RS resource mentioned in the embodiment of the present invention may be an orthogonal code corresponding to the RS. For example, when the RS transmitted by the UE is generated from different orthogonal codes, the UE generates a corresponding RS at the first RS transmission time by using orthogonal codes 1, 2, respectively, in correspondence with the first and second transmission layers, and generates a corresponding RS at the second RS transmission time by using orthogonal codes 2, 1, respectively, in correspondence with the first and second transmission layers.

The RS resource may be a Cyclic Shift (CS) used by the RS. For example, in the LTE-Advanced system, a plurality of RSs transmitted by the UE are obtained by performing different cyclic shiftings to the same sequence. If the UE transmits RSs of two layers, the UE performs, at the first RS transmission time, cyclic shiftings to the sequence in correspondence with the first and second transmission layers using parameters CS1 and CS2, respectively, to generate RSs of two layers, and the UE performs, at the second RS transmission time, cyclic shiftings in correspondence with the first and second transmission layers using parameters CS2 and CS1, respectively, to generate RSs of two layers.

The RS resource may be a comb used by the RS. For example, different RSs may use different combs. For example, comb 1 indicates to transmit RSs on the 1st, 3rd, 5th, 7th, ..., (2N-1)-th subcarriers (N is a positive integer and the number of the available subcarriers is 2N), and comb 2 indicates to transmit RSs on the 2nd, 4th, 6th, 8th, ..., 2N-th subcarriers. In that case, when the UE transmits RSs of two layers, the UE generates, at the first RS transmission time, RSs of two layers in correspondence with the first and second transmission layers using combs 1 and 2, respectively, and generates, at the second RS transmission time, RSs of two layers in correspondence with the first and second transmission layers using combs 2 and 1, respectively.
4. In the practical application process, there are many ways for the UE to change the mapping relationship between the antennas, the transmission layers and the RS resources. Some implementable technical solutions are briefly introduced as follows, but the present invention is not limited thereto.

Solution 1: the UE changes a mapping relationship between transmission layers corresponding to a same codeword and RS resources corresponding to the transmission layers corresponding to the same codeword.

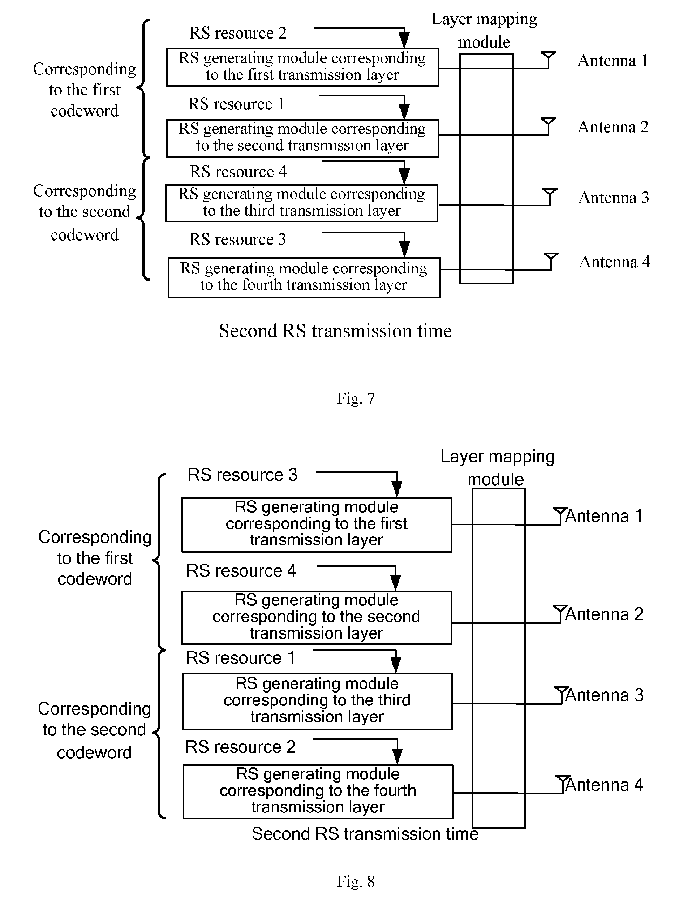

As illustrated in Figs 6 and 7, assuming that the UE transmits four RSs in four transmission layers, wherein a first codeword corresponds to a first and a second transmission layers, with the first transmission layer corresponding to RS resource 1 and the second transmission layer corresponding to RS resource 2; and a second codeword corresponds to a third and a fourth transmission layers, with the third transmission layer corresponding to RS resource 3 and a fourth transmission layer corresponding to RS resource 4.

At the first RS transmission time, on the UE, an RS generating module corresponding to the first transmission layer generates an RS corresponding to the first transmission layer by using RS resource 1, and an RS generating module corresponding to the second transmission layer generates an RS corresponding to the second transmission layer by using RS resource 2; after the mapping relationship is changed, at the second RS transmission time, the RS generating module corresponding to the first transmission layer generates the RS corresponding to the first transmission layer by using RS resource 2, and the RS generating module corresponding to the second transmission layer generates the RS corresponding to the second transmission layer by using RS resource 1.

Meanwhile, at the first RS transmission time, an RS generating module corresponding to the third transmission layer generates an RS corresponding to the third transmission layer by using RS resource 3, and an RS generating module corresponding to the fourth transmission layer generates an RS corresponding to the fourth transmission layer by using RS resource 4; after the mapping relationship is changed, at the second RS transmission time, the RS generating module corresponding to the third transmission layer generates the RS corresponding to the third transmission layer by using RS resource 4, and the RS generating module corresponding to the fourth transmission layer generates the RS corresponding to the fourth transmission layer by using RS resource 3.

Solution 2: the UE changes a mapping relationship between transmission layers corresponding to different codewords and RS resources corresponding to the transmission layers corresponding to the different codewords.

At the first transmission time, the UE side as illustrated in Fig. 6 is taken as an example. As illustrated in Figs. 6 and 8, assuming that the UE transmits four RSs in four transmission layers, wherein a first codeword corresponds to a first and a second transmission layers, with the first transmission layer corresponding to RS resource 1 and the second transmission layer corresponding to RS resource 2; a second codeword corresponds to a third and a fourth transmission layers, with the third transmission layer corresponding to RS resource 3 and the fourth transmission layer corresponding to RS resource 4.

At the first RS transmission time, the UE generates an RS corresponding to the first transmission layer by using RS resource 1, and generates an RS corresponding to the second transmission layer by using RS resource 2, respectively; after the mapping relationship is changed, at the second RS transmission time, the UE generates the RS corresponding to the first transmission layer by using RS resource 3, and generates the RS corresponding to the second transmission layer by using RS resource 4, respectively.

Meanwhile, at the first RS transmission time, the UE generates an RS corresponding to the third transmission layer by using RS resource 3, and generates an RS corresponding to the fourth transmission layer by using RS resource 4, respectively; after the mapping relationship is changed, at the second RS transmission time, the UE generates the RS corresponding to the third transmission layer by using RS resource 1, and generates the RS corresponding to the fourth transmission layer by using RS resource 2, respectively.

In the practical application process, Solutions 1 and 2 can be implemented in a combination, i.e., exchanging corresponding RS resources between different RS layers corresponding to the same codeword and between different RS layers corresponding to different codewords.

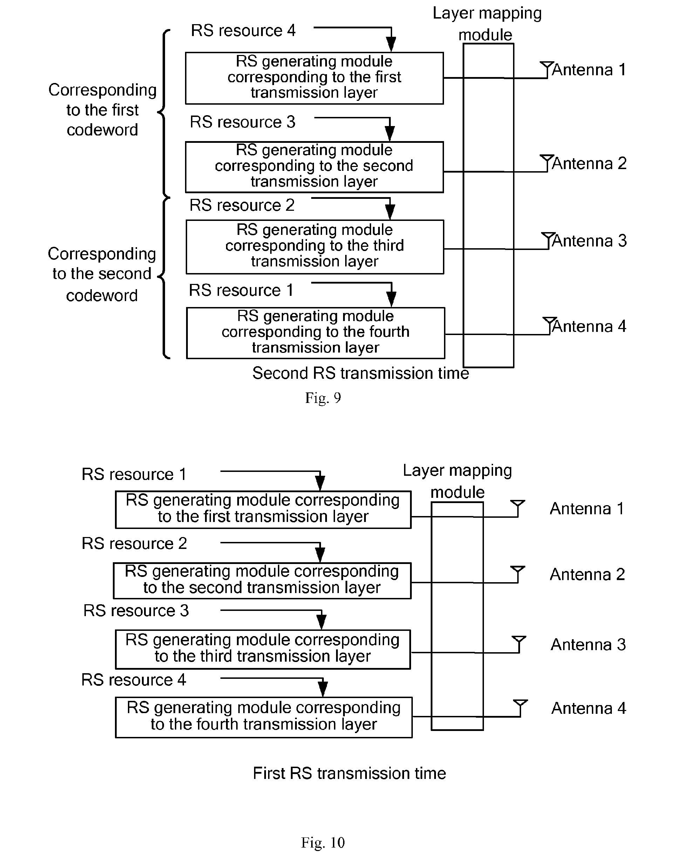

The processing at the first transmission time is introduced by taking the UE side as illustrated in Fig. 6 as an example, and the scenario of the second transmission time is illustrated in Fig. 9, assuming that the UE transmits four RSs in four transmission layers, wherein a first codeword corresponds to a first and a second transmission layers, with the first transmission layer corresponding to RS resource 1 and the second transmission layer corresponding to RS resource 2; and a second codeword corresponds to a third and a fourth transmission layers, with the third transmission layer corresponding to RS resource 3 and the fourth transmission layer corresponding to RS resource 4.

At the first RS transmission time, the UE generates an RS corresponding to the first transmission layer by using RS resource 1, and generates an RS corresponding to the second transmission layer by using RS resource 2, respectively; after the mapping relationship is changed, at the second RS transmission time, the UE generates the RS corresponding to the first transmission layer by using RS resource 4, and generates the RS corresponding to the second transmission layer by using RS resource 3, respectively.

Meanwhile, at the first RS transmission time, the UE generates an RS corresponding to the third transmission layer by using RS resource 3, and generates an RS corresponding to the fourth transmission layer by using RS resource 4, respectively; after the mapping relationship is changed, at the second RS transmission time, the UE generates the RS corresponding to the third transmission layer by using RS resource 2, and generates the RS corresponding to the fourth transmission layer by using RS resource 1, respectively.

Solution 3: the UE changes a mapping relationship between transmission layers corresponding to a same codeword and antennas corresponding to the transmission layers corresponding to the same codeword.

Solution 3 is similar to solution 1, and the distinction lies in that solution 1 changes the mapping relationship between the transmission layers corresponding to the same codeword and the RS resources corresponding to the transmission layers, while solution 3 changes the mapping relationship between the transmission layers corresponding to the same codeword and the antennas corresponding to the transmission layers. The process of changing the mapping relationship is the same and hereby the detailed description is omitted herein.

Solution 4: the UE changes a mapping relationship between transmission layers corresponding to different codewords and antennas corresponding to the transmission layers corresponding to the different codewords.

Solution 4 is similar to solution 2, and the distinction lies in that solution 2 changes the mapping relationship between the transmission layers corresponding to different codewords and the RS resources corresponding to the transmission layers, while solution 4 changes the mapping relationship between the transmission layers corresponding to different codewords and the antennas corresponding to the transmission layers. The process of changing the mapping relationship is the same and hereby the detailed description is omitted herein.

Solution 5: the UE sequentially performs cyclic shiftings to RS resources respectively corresponding to different transmission layers using a first cyclic digit in a set cyclic direction.

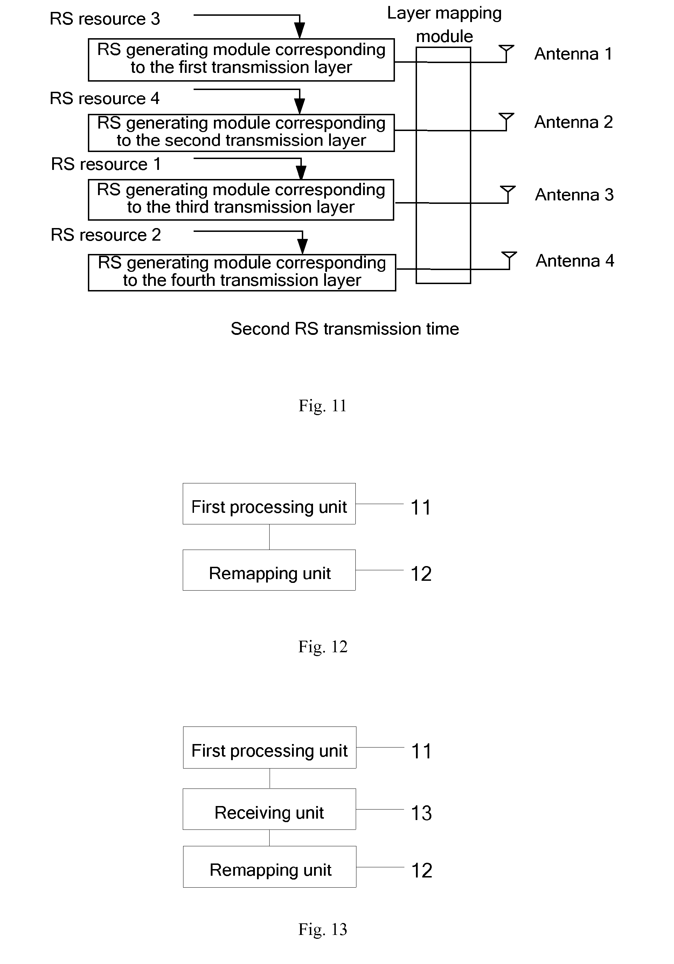

For example, when the DM RSs are to be transmitted, assuming that one TTI includes two DM RS symbols. If the BS allocates four RS resources to the UE, i.e., RS resource 1, RS resource 2, RS resource 3 and RS resource 4 as illustrated in Fig. 10, the UE generates, on a first DM RS symbol, RSs corresponding to the first to fourth transmission layers using RS resource 1, RS resource 2, RS resource 3 and RS resource 4, respectively. As illustrated in Fig. 11, the UE generates, on a second DM RS symbol, RSs corresponding to the first to fourth transmission layers using RS resource 3, RS resource 4, RS resource 1 and RS resource 2, respectively.

Particularly, when the RS resource is the CS, if the BS allocates to the UE four CSs, i.e., CS0, CS3, CS6 and CS9, respectively, the UE generates, on the first DM RS symbol, RSs corresponding to the first to fourth transmission layers using CS0, CS3, CS6 and CS9, respectively, and generates, on the second DM RS symbol, RSs corresponding to the first to fourth transmission layers using CS6, CS9, CS0 and CS3, respectively.

For another example, when the SRSs are to be transmitted, if the BS allocates four RS resources to the UE, i.e., RS resource 1, RS resource 2, RS resource 3 and RS resource 4, respectively, the UE generates, on a first SRS period, RSs corresponding to the first to fourth transmission layers using RS resource 1, RS resource 2, RS resource 3 and RS resource 4, respectively; the UE generates, on a second SRS period, RSs corresponding to the first to fourth transmission layers using RS resource 2, RS resource 3, RS resource 4 and RS resource 1, respectively; the UE generates, on a third SRS period, RSs corresponding to the first to fourth transmission layers using RS resource 3, RS resource 4, RS resource 1 and RS resource 2, respectively; and the UE generates, on a fourth SRS period, RSs corresponding to the first to fourth transmission layers using RS resource 4, RS resource 1, RS resource 2 and RS resource 3, respectively. That is, the UE performs cyclic shiftings to the RS resources corresponding to the four transmission layers at four SRS transmission time using the first cyclic digit 1.

In the above cyclic mode, the cyclic direction may be sequential or inversely sequential. For example, in the sequential direction, if at the first RS transmission time, the RSs corresponding to the first to fourth transmission layers are generated from RS resource 1, RS resource 2, RS resource 3 and RS resource 4, then at the second RS transmission time, the RSs corresponding to the first to fourth transmission layers are generated from RS resource 2, RS resource 3, RS resource 4 and RS resource 1. For another example, in the inversely sequential direction, if at the first RS transmission time, the RSs corresponding to the first to fourth transmission layers are generated from RS resource 1, RS resource 2, RS resource 3 and RS resource 4, then at the second RS transmission time, the RSs corresponding to the first to fourth transmission layers are generated from RS resource 4, RS resource 1, RS resource 2 and RS resource 3.

The cyclic direction and the first cyclic digit may be preset on both of the sides of the BS and the UE, so that the BS does not need to transmit any signaling to the UE, and the signaling can be saved.

The cyclic direction and the first cyclic digit may also be configured by the BS. In that process, the BS transmits a signaling to the UE to configure the cyclic direction and the first cyclic digit; after receiving the signaling, the UE sequentially performs cyclic shiftings to the RS resources corresponding to the different transmission layers based on the signaling. For example, when the BS allocates four RS resources to the UE, i.e., RS resource 1, RS resource 2, RS resource 3 and RS resource 4, respectively, and notifies the UE that the cyclic direction is sequential and the first cyclic digit is 1, the UE generates, on a first DM RS symbol, RSs corresponding to the first to fourth transmission layers by using RS resource 1, RS resource 2, RS resource 3 and RS resource 4, respectively; and the UE generates, on a second DM RS symbol, RSs corresponding to the first to fourth transmission layers by using RS resource 2, RS resource 3, RS resource 4 and RS resource 1, respectively. Thus a more flexible configuration can be achieved.

In addition, the first cyclic digit in the cyclic mode may also be generated from any one or any combination of the following parameters: a current cell ID, a subframe index, the number of the RS layers, the number of the antenna groups, and index information indicating the RS resources.

For example, when the cyclic digit is generated from the current cell ID, it may be represented as [*ID_{cell}* mod(*N_{layer}*-1)]+1 , wherein *ID_{cell}* indicates the cell ID, *N_{layer}* indicates the number of the RS layers, and mod indicates a modular operation.

For another example, when the cyclic digit is generated from the subframe index, it may be represented as [*Index_{subframe}* mod(*N_{layer}*-1)] + 1, wherein *Index_{subframe}* indicates the subframe index.

For another example, when the cyclic digit is generated from the index of the RS layers, the cyclic digit may be represented as *N_{layer}*-1. Alternatively, the cyclic digit may also be generated from the number of the antenna groups.

For another example, when the cyclic digit is generated from the index information indicating the RS resources, in the LTE-Advanced system if the BS transmits information to the UE to notify the UE that the CS used by one of the RSs is CS0, the UE may determine that the RS resources allocated by the BS to the UE include CS0 and CS6; and if the BS transmits information to the UE to notify the UE that the CS used by one of the RSs is CS3, the UE may determine that the RS resources allocated by the BS to the UE include CS3 and CS9. In that case, the cyclic digit may be represented as *I_{RS}* mod 2, wherein *I_{RS}* indicates information of RS resources transmitted by the BS to the UE, and it may be a CS number used by one of the RSs of the UE. When UE1 and UE2 are paired with each other and they both transmit two RSs, assuming that the BS transmits information to UE1 to notify UE1 that the CS used by one of the RSs is CS0, and transmits information to UE2 to notify UE2 that the CS used by one of the RSs is CS3, then the cyclic digit of UE1 is 0 and the cyclic digit of UE2 is 1, thus the strong interference between UE1 and UE2 can be dispersed to a plurality of RS transmission time.

In addition, the solution can also sequentially perform cyclic shiftings to the antennas corresponding to the different transmission layers. The implementation is the similar and hereby the detailed description is omitted herein.

Solution 6: the UE changes the mapping relationship between the antennas, the transmission layers and the RS resources according to the set remapping scheme.

For example, when the DM RSs are to be transmitted, assuming that one TTI includes two DM RS symbols, if the BS allocates to the UE three RS resources, i.e., RS resource 1, RS resource 2 and RS resource 3, respectively, the UE generates, on a first DM RS symbol, RSs corresponding to the first to third transmission layers using RS resources 1 to 3, respectively. On a second DM RS symbol, resources used by the UE to generate RSs corresponding to the first to third transmission layers may be one of the schemes shown in the following table.

| | The first RS transmission time: RS resources corresponding to the first to third transmission layers | The second RS transmission time: RS resources corresponding to the first to third transmission layers |
|---|---|---|
| Scheme 1 | RS resource 1, RS resource 2, RS resource 3 | RS resource 1, RS resource 3, RS resource 2 |
| Scheme 2 | RS resource 1, RS resource 2, RS resource 3 | RS resource 2, RS resource 1, RS resource 3 |
| Scheme 3 | RS resource 1, RS resource 2, RS resource 3 | RS resource 2, RS resource 3, RS resource 1 |
| Scheme 4 | RS resource 1, RS resource 2, RS resource 3 | RS resource 3, RS resource 1, RS resource 2 |
| Scheme 5 | RS resource 1, RS resource 2, RS resource 3 | RS resource 3, RS resource 2, RS resource 1 |

The table and which scheme to be used may be preset on the sides of the UE and the BS, or notified to the UE by the BS through a signaling so as to be more flexible. For example, when the BS transmits a signaling to notify the UE to use scheme 2, the UE generates, on the second DM RS symbol, RSs corresponding to the first to third transmission layers using RS resource 2, RS resource 1 and RS resource3, respectively.

In addition, the index of one selected from at least two candidate exchange schemes in the above table may also be generated from any of the following parameters: the current cell ID, a subframe index, the number of the RS layers, the number of the antenna groups, and index information indicating the RS resources. The specific generation process is the same as the generation process of the cyclic digit in the cyclic mode used in Solution 5, and hereby the detailed description is omitted herein.

In the specific implementation of the technical solution of changing the mapping relationship, the same or different technical solutions for changing the mapping relationship may be used to transmit the DM RSs and the SRSs. Through corresponding configuration preset in the UE, the current UE may be indicated to transmit the DM RSs and the SRSs by using the same or different technical solutions for changing the mapping relationship. The BS may also notify the configuration by transmitting a signaling to the UE, so as to control the UE to transmit the DM RSs and the SRSs by using the same or different technical solutions for changing the mapping relationship.

For example, preferably, when the DM RSs and the SRSs are transmitted using the same solution for changing the mapping relationship, the BS only needs to transmit one signaling to the UE, and after receiving the signaling sent by the BS, the UE can exchange the used RS resources in the same method for the DM RSs and the SRSs at different RS transmission time, thereby saving the signaling.

For another example, when the DM RSs and the SRSs are transmitted by using different technical solutions for changing the mapping relationship, the BS may transmit a plurality of signaling to the UE to control schemes for changing the mapping relationship used for the DM RSs and the SRSs, respectively, and after receiving the signaling sent by the BS, the UE exchanges the used RS resources for the DM RSs and the SRSs at different RS transmission time, respectively, based on the plurality of signaling, thereby achieving a higher flexibility.

In the execution of the scheme for changing the mapping relationship, when the BS transmits a signaling to notify the UE to change the mapping relationship, the signaling may be notified to the UE semi-statically, i.e., the UE performs relevant operation always using the previously received instruction before receiving a new instruction. Alternatively, the signaling may be notified to the UE dynamically, i.e., before the UE transmits an RS each time, the BS needs to transmit an instruction to the UE to control the UE to perform relevant operation.

Optionally, the BS may notify the signaling to a single UE through unicast, to a plurality of UEs through multi-cast, or to all UEs in the cell through broadcast.

Further, the BS may transfer the signaling to the UE in a Physical Downlink Control Channel (PDCCH), a Physical Downlink Shared Channel (PDSCH) or a Broadcasting Channel (BCH).

Through the descriptions of the above embodiments, a person skilled in the art can clearly understand that the present invention may be implemented through hardware or a combination of software and necessary common hardware platform. Based on such a understanding, the technical solution of the present invention may be reflected in a form of software product storable in a nonvolatile storage medium (e.g., CD-ROM, USB flash disk, mobile hard disk, etc.), including several instructions to enable a computer device (e.g., personal computer, server, network equipment, etc.) to execute the methods described in the embodiments of the present invention.

The embodiment as illustrated in Fig. 12 provides a communication device for implementing the above method, including a first processing unit 11 and a remapping unit 12.

The first processing unit 11 is configured to generate an RS on each transmission layer by using an RS resource corresponding to the transmission layer based on the mapping relationship, and transmit the generated RS via an antenna corresponding to the transmission layer at a first RS transmission time.

The remapping unit 12 is configured to change the mapping relationship between the antennas, the transmission layers and the RS resources.

The first processing unit 11 is further configured to generate an RS on each transmission layer by using an RS resource corresponding to the transmission layer based on the changed mapping relationship, and transmit the generated RS via the antenna corresponding to the transmission layer at a second RS transmission time.

The communication device described in the embodiment of the present invention can change the RS transmitted via the antennas at different transmission time, thereby avoiding the problem that the performance for the BS to detect the RS transmitted from those antennas is very likely to be quite poor when the RS transmitted via certain antennas continuously undergo strong interferences from the RS transmitted by other UE, and improving the anti-interference abilities of the RS transmitted via the antennas.

Further, as illustrated in Fig. 13, the communication device further includes a receiving unit 13.

The receiving unit 13 is configured to receive a remapping control signaling sent from a correspondent node before the remapping unit 12 changes the mapping relationship between the antennas, the transmission layers and the RS resources. The signaling may be transmitted independently or carried in another signaling.

The remapping unit changes the mapping relationship between the antennas, the transmission layers and the RS resources based on the remapping control signaling.

In the practical implementation (not illustrated), the remapping unit includes at least one of a first modifying module and a second modifying module.

The first modifying module is configured to change a mapping relationship between transmission layers corresponding to a same codeword and RS resources corresponding to the transmission layers corresponding to the same codeword. The first modifying module is further configured to change a mapping relationship between transmission layers corresponding to different codewords and RS resources corresponding to the transmission layers corresponding to the different codewords.

The second modifying module is configured to change a mapping relationship between transmission layers corresponding to a same codeword and antennas corresponding to the transmission layers corresponding to the same codeword. The second modifying module is further configured to change a mapping relationship between transmission layers corresponding to different codewords and antennas corresponding to the transmission layers corresponding to the different codewords.

Optionally (not illustrated), the remapping unit includes at least one of a third modifying module and a fourth modifying module.

The third modifying module is configured to sequentially perform cyclic shiftings to RS resources respectively corresponding to different transmission layers using a first cyclic digit in a set cyclic direction. The third modifying module is further configured to sequentially perform cyclic shiftings to antennas respectively corresponding to different transmission layers using the first cyclic digit in the set cyclic direction.

The first cyclic digit in the cyclic mode may also be generated from any one or any combination of the following parameters: a current cell ID, a subframe index, the number of the RS layers, the number of the antenna groups, and index information indicating the RS resources. The cyclic direction and the first cyclic digit may be preset on both of the sides of the BS and the UE, so that the BS does not need to transmit any signaling to the UE, and the signaling can be saved.

The fourth modifying module is configured to change the mapping relationship between the antennas, the transmission layers and the RS resources according to the set remapping scheme.

In the specific implementation, the fourth modifying module selects one from at least two set remapping schemes according to any one or any combination of a current cell ID, a subframe index, the number of the RS layers, the number of the antenna groups, and index information of the RS resources, and changes the mapping relationship between the antennas, the transmission layers and the RS resources according to the selected remapping scheme, wherein the set remapping schemes may be preset in the communication device or sent by the correspondent node to the communication device.

When the communication device is the UE, the correspondent node may be a BS.

The embodiment of the present invention is mainly applied to the process of transmitting a plurality of RSs via a plurality of antennas, so as to improve the anti-interference abilities of the RSs transmitted via the antennas.

The above descriptions are just specific embodiments of the present invention, and the protection scope of the present invention is not limited thereto. Any change or replacement easily conceivable to a person skilled in the art within the technology scope disclosed by the present invention shall be covered by the protection scope of the present invention. Therefore, the protection scope of the present invention shall be determined by that of the claims.

## Claims

1. A method for transmitting a Reference Signal (RS), **characterized in that** the method is applicable to a scenario where a user equipment (UE) has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, and the method comprises:
generating, by the UE, an RS on each transmission layer by using an RS resource corresponding to the transmission layer based on the mapping relationship, and transmitting the generated RS via an antenna corresponding to the transmission layer at a first RS transmission time;
changing, by the UE, the mapping relationship between the antennas, the transmission layers and the RS resources; and
generating, by the UE, an RS on each transmission layer by using an RS resource corresponding to the transmission layer based on the changed mapping relationship, and transmitting the generated RS via an antenna corresponding to the transmission layer at a second RS transmission time.

2. The method for transmitting an RS according to claim 1, wherein before changing, by the UE, the mapping relationship between the antennas, the transmission layers and the RS resources, and the method further comprises:
receiving, by the UE, a remapping control signaling sent from a correspondent node,
wherein changing, by the UE, the mapping relationship between the antennas, the transmission layers and the RS resources comprises:
changing, by the UE, the mapping relationship between the antennas, the transmission layers and the RS resources based on the remapping control signaling.

3. The method for transmitting an RS according to claim 1 or 2, wherein,
the first RS transmission time and the second RS transmission time are different RS transmission time in a same transmission time interval.

4. The method for transmitting an RS according to any of claims 1 to 3, wherein changing, by the UE, the mapping relationship between the antennas, the transmission layers and the RS resources comprises:
changing, by the UE, a mapping relationship between transmission layers corresponding to a same codeword and RS resources corresponding to the transmission layers corresponding to the same codeword, and/or changing a mapping relationship between transmission layers corresponding to different codewords and RS resources corresponding to the transmission layers corresponding to the different codewords;
and/or
changing, by the UE, a mapping relationship between transmission layers corresponding to a same codeword and antennas corresponding to the transmission layers corresponding to the same codeword, and/or changing a mapping relationship between transmission layers corresponding to different codewords and antennas corresponding to the transmission layers corresponding to the different codewords.

5. The method for transmitting an RS according to any of claims 1 to 3, wherein changing, by the UE, the mapping relationship between the antennas, the transmission layers and the RS resources comprises:
sequentially performing, by the UE, cyclic shiftings to RS resources respectively corresponding to different transmission layers using a first cyclic digit in a set cyclic direction and/or sequentially performing cyclic shiftings to antennas respectively corresponding to different transmission layers using the first cyclic digit in the cyclic direction;
or
changing, by the UE, the mapping relationship between the antennas, the transmission layers and the RS resources according to a set remapping scheme.

6. The method for transmitting an RS according to claim 5, wherein the first cyclic digit is generated by the UE from any one or any combination of the following parameters: a current cell identity (ID), a subframe index, the number of the transmission layers, the number of the antennas, and index information of the RS resources; or the first cyclic digit is sent to the UE by the correspondent node,
wherein changing, by the UE, the mapping relationship between the antennas, the transmission layers and the RS resources according to the set remapping scheme comprises:
selecting, by the UE, one from at least two set remapping schemes according to any one or any combination of the current cell ID, the subframe index, the number of the RS layers, the number of antenna groups, and the index information of the RS resources, and changing the mapping relationship between the antennas, the transmission layers and the RS resources according to the selected remapping scheme, wherein the set remapping schemes are preset in the UE or sent by the correspondent node to the UE.

7. A communication device, **characterized in that** the communication device has at least two antennas which correspond to at least two transmission layers and at least two Reference Signal (RS) resources, wherein a mapping relationship exists between the antennas, the transmission layers and the RS resources, each transmission layer corresponds to one RS resource and each transmission layer corresponds to at least one antenna, and the communication device comprises:
a first processing unit configured to generate an RS on each transmission layer by using an RS resource corresponding to the transmission layer based on the mapping relationship, and transmit the generated RS via an antenna corresponding to the transmission layer at a first RS transmission time; and
a remapping unit configured to change the mapping relationship between the antennas, the transmission layers and the RS resources,
wherein the first processing unit is further configured to generate an RS on each transmission layer by using an RS resource corresponding to the transmission layer based on the changed mapping relationship, and transmit the generated RS via the antenna corresponding to the transmission layer at a second RS transmission time.

8. The communication device according to claim 7, further comprising:
a receiving unit configured to receive a remapping control signaling sent from a correspondent node,
wherein the remapping unit is further configured to change the mapping relationship between the antennas, the transmission layers and the RS resources based on the remapping control signaling.

9. The communication device according to claim 7 or 8, wherein the remapping unit comprises at least one of the following modules:
a first modifying module configured to change a mapping relationship between transmission layers corresponding to a same codeword and RS resources corresponding to the transmission layers corresponding to the same codeword, and/or change a mapping relationship between transmission layers corresponding to different codewords and RS resources corresponding to the transmission layers corresponding to the different codewords; and
a second modifying module configured to change a mapping relationship between transmission layers corresponding to a same codeword and antennas corresponding to the transmission layers corresponding to the same codeword, and/or change a mapping relationship between transmission layers corresponding to different codewords and antennas corresponding to the transmission layers corresponding to the different codewords.

10. The communication device according to claim 7 or 8, wherein the remapping unit comprises at least one of the following modules:
a third modifying module configured to sequentially perform cyclic shiftings to RS resources respectively corresponding to different transmission layers using a first cyclic digit in a set cyclic direction and/or sequentially perform cyclic shiftings to antennas respectively corresponding to different transmission layers using the first cyclic digit in the set cyclic direction using the first cyclic digit in the cyclic direction; and
a fourth modifying module configured to change the mapping relationship between the antennas, the transmission layers and the RS resources according to a set remapping scheme.

11. The communication device according to claim 10, wherein the fourth modifying module selects one from at least two set remapping schemes according to any one or any combination of a current cell identity (ID), a subframe index, the number of the RS layers, the number of antennas, and index information of the RS resources, and changes the mapping relationship between the antennas, the transmission layers and the RS resources according to the selected remapping scheme, wherein the set remapping schemes are preset in the communication device or sent by the correspondent node to the communication device.

12. A method for transmitting a Reference Signal (RS), **characterized in that** the method is applicable to a scenario where a user equipment (UE) has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, wherein at a first RS transmission time, an RS transmitted via an antenna corresponding to each transmission layer is generated by the UE on the transmission layer by using an RS resource corresponding to the transmission layer based on the mapping relationship; the method comprising:
transmitting a remapping control signaling to the UE, enabling the UE to change the mapping relationship between the antennas, the transmission layers and the RS resources, generate an RS on each transmission layer by using an RS resource corresponding to the transmission layer based on the changed mapping relationship, and transmit the generated RS via an antenna corresponding to the transmission layer at a second RS transmission time.

13. A base station, **characterized in that** the base station is applicable to a scenario where a user equipment (UE) has at least two antennas which correspond to at least two transmission layers and at least two RS resources, wherein a mapping relationship exists between the antennas, the transmission layers and the RS resources, each transmission layer corresponds to one RS resource and each transmission layer corresponds to at least one antenna, wherein at a first RS transmission time, an RS transmitted via an antenna corresponding to each transmission layer is generated by the UE on the transmission layer by using an RS resource corresponding to the transmission layer based on the mapping relationship; the base station comprising:
a remapping control signaling transmission unit configured to transmit a remapping control signaling to the UE, eanbling the UE to change the mapping relationship between the antennas, the transmission layers and the RS resources, generate an RS on each transmission layer by using an RS resource corresponding to the transmission layer based on the changed mapping relationship, and transmit the generated RS via an antenna corresponding to the transmission layer at a second RS transmission time.
